Europäisches Patentamt

**European Patent Office**

**Office européen des brevets**

(11) Numéro de publication: **0 262 042 B1**

# FASCICULE DE BREVET EUROPEEN

(45) Date de publication de fascicule du brevet: **08.04.92**  (51) Int. Cl.⁵: **H01R 39/64**

(21) Numéro de dépôt: **87402103.3**

(22) Date de dépôt: **21.09.87**

(54) **Bague de transmission électrique montée entre la colonne de direction et le volant d'un véhicule automobile.**

(30) Priorité: **23.09.86 FR 8613274**
**24.03.87 FR 8704078**

(43) Date de publication de la demande:
**30.03.88 Bulletin 88/13**

(45) Mention de la délivrance du brevet:
**08.04.92 Bulletin 92/15**

(84) Etats contractants désignés:
**DE ES FR GB IT SE**

(56) Documents cités:
**EP-A- 0 150 644**
**US-A- 3 544 949**

(73) Titulaire: **JAEGER**
**2, rue Baudin**
**F-92303 Levallois-Perret(FR)**

(72) Inventeur: **Lagier, Daniel**
**135 Rue des Ombraies**
**F-92000 Nanterre(FR)**
Inventeur: **Auffray, Jean-Pierre**
**Rue Neuve La Boissière en Thelle**
**F-60570 Andeville(FR)**

(74) Mandataire: **Martin, Jean-Jacques et al**
**Cabinet REGIMBEAU 26, Avenue Kléber**
**F-75116 Paris(FR)**

## Description

La présente invention concerne une bague de transmission électrique destinée à être montée entre la colonne de direction et le volant d'un véhicule automobile, en vue d'assurer la liaison électrique en rotation entre le commutateur de commande de différentes fonctions, placé sur le volant, et les récepteurs des organes à commander.

Dans les véhicules automobiles actuels, le conducteur dispose d'un nombre de plus en plus grand d'appareils électriques ou électroniques (ordinateurs de bord, auto-radio, limiteur de vitesse etc.) dont les commandes, s'ajoutant aux dispositifs classiques, (indicateur de direction, éclairage, essuie-glace...) sont disposées sur le tableau de bord et autour du volant. La manoeuvre de l'ensemble de ces commandes n'est pas toujours aisée, notamment pendant la marche du véhicule et peut même alors se révéler dangereuse.

Afin de rassembler l'ensemble des fonctions précitées sur le volant, à proximité de la main du conducteur, on a proposé la mise en oeuvre de bagues de transmission composées d'une première série d'anneaux conducteurs solidaires d'une douille fixée sur la colonne de direction, ces anneaux coopérant avec une deuxième série d'anneaux également conducteurs solidaires d'une embase elle-même rendue solidaire en rotation du volant, chaque paire de contact formée par un anneau de chacune des deux séries étant séparée des paires voisines au moyen d'un élément isolant.

Pour une description plus détaillée de la bague de transmission précédemment décrite, on pourra se reporter à la demande de brevet européen n °0150644 au nom de la Demanderesse. Bien que la bague de transmission telle que décrite précédemment permette d'améliorer sensiblement le fonctionnement des systèmes de transmission connus et utilisés jusqu'alors, il s'est avéré que, en raison de la multiplication importante du nombre de voies de transmission, la réalisation des connexions des fils conducteurs aux pistes de conduction présentait à terme des problèmes de tenue mécanique des pistes de conduction précitées en raison des contraintes mécaniques exercées par les conducteurs électriques reliant les organes récepteurs ou effecteurs à l'un ou l'autre des anneaux de première ou deuxième série, du fait du grand nombre de rotation alternées exercées par le conducteur à l'utilisation.

La présente invention a pour but de remédier aux inconvénients précités par la mise en oeuvre d'une bague de transmission dans laquelle les fonctions de connexion et de contact de chaque anneau conducteur, tant de la première que de la deuxième série, sont sensibement découplées.

Un autre objet de la présente invention est la mise en oeuvre d'une bague de transmission présentant par rapport aux systèmes de l'art antérieur une fiabilité tant mécanique qu'électrique hautement améliorée.

Un autre objet de la présente invention est également, du fait de la seule conception des anneaux conducteurs tant du premier que du deuxième type, une simplification de mise en oeuvre d'une bague de transmission conformément à l'objet de l'invention.

La bagué de transmission électrique montée entre la colonne de direction et le volant d'un véhicule automobile pour assurer la liaison en rotation entre un commutateur de commande monté sur le volant et les récepteurs des organes à commander, objet de l'invention, est composée d'une première série de n anneaux conducteurs, s'étendant radialement par rapport à l'axe de la colonne de direction, solidaires d'une douille fixée sur la colonne de direction, qui coopèrent électriquement ment avec une deuxième série de n anneaux, mécaniquement imbriqués en alternance entre les anneaux de la première série, également conducteurs, solidaires en rotation d'une embase fixée sur le volant, chaque paire de contact formée par un anneau de chacune des deux séries étant isolée électriquement de la paire voisine.

Elle est remarquable en ce que chaque anneau conducteur de la première, respectivement deuxième série, est constitué par au moins deux couronnes concentriques rendues solidaires mécaniquement et électriquement en au moins deux points de liaison disposés selon un de leur diamètre commun, de façon à découpler, au niveau de chaque anneau, les fonctions de connexion et d'entraînement ou de maintien mécanique par la douille (5) respectivement l'embase (6) d'une part et de contact électrique avec l'anneau de l'autre série d'autre part.

L'invention trouve application au domaine technique de l'automobile, de manière non exclusive, ainsi que dans les domaines de l'aéronautique ou de la construction électromécanique en général.

Elle sera mieux comprise à la lecture de la description et à l'observation des dessins ci-après dans lesquels :
- la figure 1 représente une vue en coupe d'une bague de transmission conforme à la présente invention montée sur le volant d'une automobile,
- la figure 2 représente une vue en plan d'une bague de transmission selon l'invention,
- la figure 3a représente une vue en coupe selon un plan de coupe BB de la figure 2 d'une bague de transmission conforme à la présente invention,
- la figure 3b représente une vue en plan d'un anneau conducteur destiné à constituer, dans la bague de transmission selon l'invention, la première série d'anneaux,

- la figure 3c représente une vue en plan d'un anneau conducteur destiné à constituer, dans la bague de transmission selon l'invention, la deuxième série d'anneaux,
- la figure 3d représente une vue en plan d'un anneau conducteur destiné à constituer, dans la bague de transmission selon l'invention, une troisième série d'anneaux,
- la figure 3e représente, en coupe selon un plan de coupe AC de la figure 2, l'agencement particulier des anneaux conducteurs des première, deuxième et troisième séries,
- la figure 4 représente une vue en plan d'un anneau conducteur destiné à constituer, dans la bague de transmission selon l'invention, une nouvelle série d'anneaux et une vue de face de la section DD de cet anneau,
- la figure 5 représente une vue en plan d'un anneau assurant la fonction d'un anneau de deuxième série,
- la figure 6 représente une vue de face de la section DD de l'anneau de la figure 2, dans un mode de réalisation particulièrement avantageux permettant un empilement successif d'un couple constitué par un anneau selon la figure 1 et un anneau selon la figure 2, deux de ces anneaux étant successivement superposés,
- la figure 7a représente une vue en coupe d'un empilement formant connexion en parallèle de sécurité selon la présente invention.
- la figure 7b représente une vue en coupe de l'empilement formant connexion en parallèle de sécurité selon la présente invention,

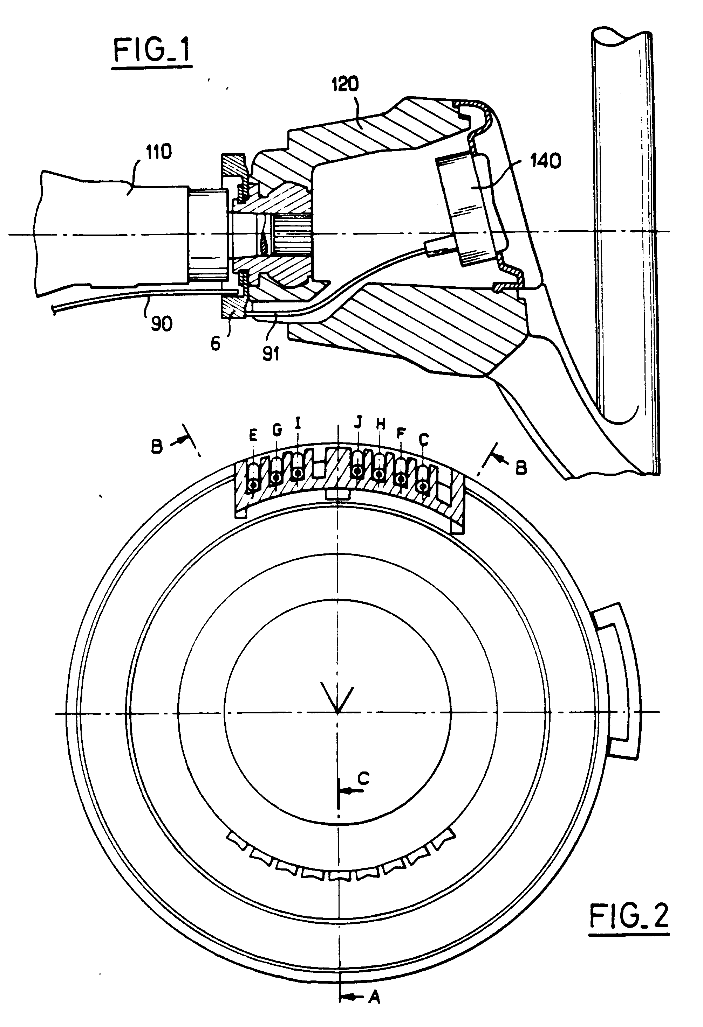

La bague de transmission électrique objet de l'invention sera tout d'abord décrite en liaison avec la figure 1.

Conformément à la figure précitée, la bague de transmission électrique selon l'invention est montée entre la colonne de direction notée 110 sur la figure 1 et le volant noté 120 d'un véhicule automobile pour assurer la liaison en rotation entre un commutateur de commande noté 140 monté sur le volant, à proximité des mains du conducteur , et les récepteurs des organes à commander.

La connexion électrique entre le commutateur de commande 140 et la bague de transmission électrique montée sur une embase 6 est assurée par l'intermédiaire d'une nappe de fils notée 91, la bague de transmission étant enoutre reliée par une nappe de fils 90 aux récepteurs des organes à commander.

Pour une description plus détaillée du montage de la bague de transmission électrique objet de l'invention entre la colonne de direction 110 et le volant 120 d'un véhicule autombile, on pourra se reporter à la demande de brevet français n° 83 20519 au nom de la Demanderesse précédemment citée.

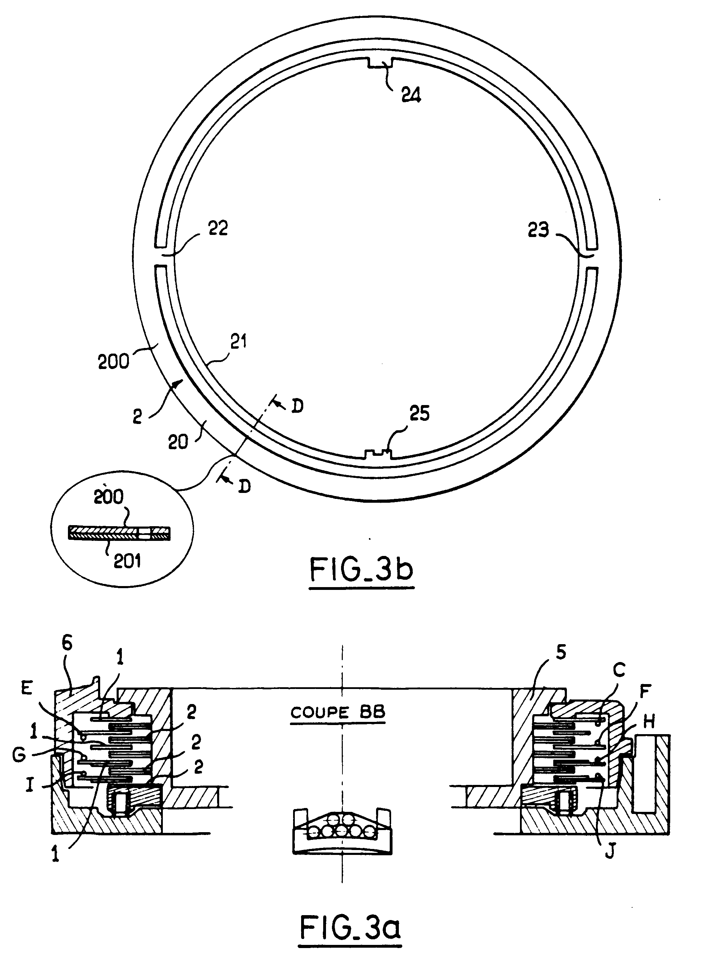

Une description plus détaillée de la bague de transmission objet de l'invention sera donnée en liaison avec les figures 2 et 3a.

Conformément aux figures précitées, la bague de transmission selon l'invention est composée d'une première série de n anneaux, notés 2 sur la figure 3a, conducteurs de l'électricité solidaire d'une douille 5 fixée sur la colonne de direction 110. Les anneaux 2 coopèrent électriquement avec une deuxième série de n anneaux notés 1, également conducteurs de l'électricité, solidaires en rotation d'une embase 6, mécaniquement solidaire du volant ainsi que représentée en figures 1 et 3a. Chaque paire de contacts formée par un anneau de chacune des deux séries, anneaux 2 de la première série et anneaux 1 de la deuxième série, est isolée électriquement de la paire voisine.

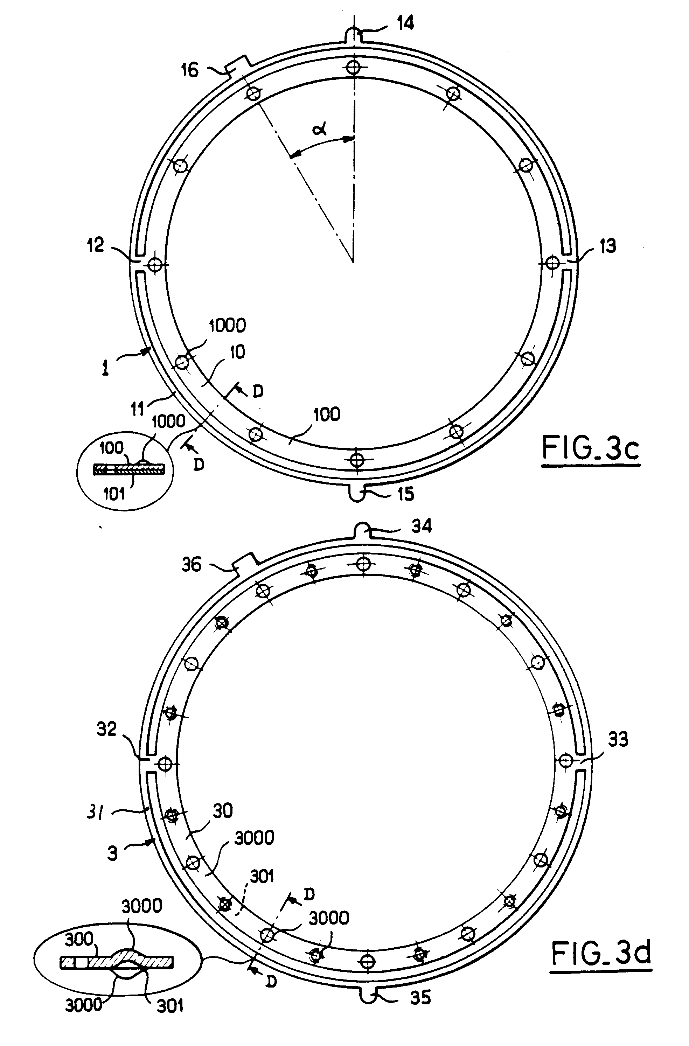

Ainsi qu'il apparaît clairement en figures 3b et 3c, conformément à l'invention, chaque anneau conducteur 1 et 2 de la première, respectivement deuxième série d'anneaux, est constitué par deux couronnes concentriques notées 20 et 21, respectivement 10 et 11 sur les figures 3b et 3c précitées. Les couronnes concentriques 20 21, et 10, 11, sont respectivement rendues électriquement et mécaniquement solidaires en au moins deux points de liaison 22, 23 et 12, 13 disposés selon un de leur diamètre commun. La structure telle que définie des anneaux 2 et 1 précédemment décrite, permet de séparer, au niveau de chaque anneau, les fonctions de connexion et d'entraînement-maintien mécanique d'une part et de contact électrique d'autre part. Ainsi, les anneaux 2 et 1 constituant les anneaux de la première et de la deuxième série, peuvent au cours de leur utilisation conserver une souplesse sensiblement constante, selon la direction axiale, et homogène sur toute leur périphérie sensiblement.

Ainsi qu'il sera décrit, de manière particulièrement détaillée dans la description ci-après, l'une des couronnes, relativement rigide dans le sens axial, peut être destinée avantageusement à réaliser la fonction de contact électrique, alors que l'autre couronne, plus souple, est plus particulièrement destinée à réaliser la fonction de connexion et d'entraînement-maintien pour chaque anneau considéré.

De manière avantageuse, les couronnes concentriques 20, 21 respectivement 10,11 ont une dimension différente, la couronne 21 respectivement 11 de chaque anneau ayant une dimension radiale faible, inférieure à 1/3 de la dimension radiale de la couronne 20,10 correspondante, afin de leur conférer la qualité de souplesse axiale relative précitée.

Selon une caractéristique avantageuse de la bague de transmission objet de l'invention, chaque anneau peut comporter avantageusement sur une face une couche notée 201, 101, de matériau isolant tel qu'un verni ou une laque. Les couches de matériau isolant sont représentées en vue agrandie selon une coupe selon un plan radial DD des figures 3b et 3c sur ces mêmes figures.

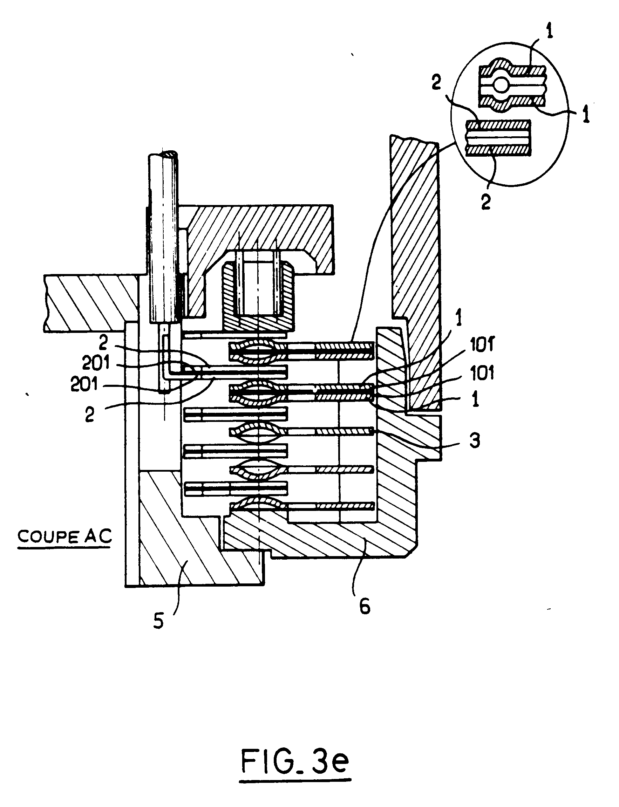

Un mode d'agencement non limitatif des anneaux 2 de la première série et des anneaux 1 de la deuxième série, pour former la bague de transmission objet de l'invention, sera décrit plus en détail en relation avec la figure 3e, laquelle représente une vue en coupe de la figure 2. L'agencement représenté en figure 3e est donné à titre d'exemple non limitatif.

Selon la figure 3e précitée, la couche 101,201 de matériau isolant de chaque anneau 1, 2, est contenue alternativement entre deux anneaux 1 solidaires en rocation du volant, puis entre deux anneaux 2 solidaires de la colonne de direction. Ainsi, une paire d'anneaux est constituée par un anneau 2 de la première série, en contact électrique avec un anneau 1 de la deuxième série, mais deux paires consécutives sont bien entendu électriquement isolées par deux couches d'isolant respectives 101,201, mises ainsi en contact.

Ainsi qu'il apparaît en outre en figure 3e, la bague de transmission peut de manière avantageuse comporter au moins un anneau 3 d'une troisième série. Cet anneau comprend deux pistes de contact opposées, une sur chaque face, destinées à assurer le contact électrique entre deux anneaux 1 successifs de la deuxième série, empilés symétriquement par rapport au plan médian de l'anneau 3. Le montage particulier des anneaux 3 de la troisième série, entre deux anneaux consécutifs ou successifs de la deuxième série par exemple, permet d'obtenir ainsi un contact en parallèle sur deux anneaux successifs de la deuxième série précitée. L'utilisation d'anneaux de la troisième série, d'un ou plusieurs de ces anneaux, permet bien entendu d'obtenir ainsi des contacts dits de sécurité, pour lesquels les deux contacts en parallèles permettent une redondance de contacts électriques capables d'assurer une meilleure sécurité.

Une description plus détaillée de la structure des anneaux de la première, respectivement deuxième ou troisième série, sera donnée en liaison avec les figures 3b, 3c et 3d.

Conformément à la figure 3b, l'anneau conducteur 2 destiné à réaliser une bague de transmission conformément à l'invention, l'anneau 2 constituant la première série d'anneaux, celui-ci comprend une première couronne circulaire 20, destinée à former piste de contact avec la piste de contact correspondante d'un anneau 1 de la deuxième série d'anneaux. L'anneau 2 comporte en outre une deuxième couronne circulaire 21 intérieure à la première, formant piste de connexion. La deuxième couronne 21 est rendue solidaire mécaniquement et électriquement de la première couronne circulaire par deux points d'attache diamétraux 22, 23. La deuxième couronne circulaire 21 comporte en outre à sa périphérie interne au moins un ergot de positionnement 24 et une languette de connexion 25.

La première couronne circulaire 20 formant piste de contact comporte une surface plane 200, formant la piste de contact précitée.

L'anneau 2 formant première série d'anneaux est, de manière avantageuse, constitué en un matériau tel que le laiton.

L'anneau conducteur 1 destiné à constituer la deuxième série d'anneaux tel que représenté en figure 3c, comprend, avantageusement, une première couronne circulaire 10 destinée à former piste de contact avec la piste de contact correspondante d'un anneau de la première série d'anneaux, anneau 2. L'anneau 1 comprend en outre une deuxième couronne circulaire 11, extérieure à la première, formant piste de connexion. La deuxième couronne est rendue solidaire, mécaniquement et électriquement de la première couronne circulaire , par deux points d'attache 12, 13, diamétraux. Elle comporte à sa périphérie externe deux ergots de positionnement 14 et 15 disposés selon un diamètre et une languette de connexion. Bien entendu, les ergots de positionnement peuvent être prévus en un nombre supérieur à deux. En outre, la couronne circulaire 11, comporte également, une languette de connexion notée 16, disposée à sa périphérie externe.

Ainsi qu'on le remarquera sur la figure 3c, la première couronne circulaire 10 comporte une face 100, formant piste de contact, présentant des bossages 1000 régulièrement répartis. Les bossages 1000 permettent d'assurer un meilleur contact électrique entre piste de contact des anneaux de la première, respectivement deuxième série d'anneaux, en augmentant localement la pression de contact sous toutefois augmenter de façon importante le couple d'entraînement en rotation.

L'anneau 1 peut avantageusement être constitué en un matériau tel que du cuivre au béryllium. On a pu remarquer en effet que les meilleures conditions de fonctionnement de la bague de transmission objet de l'invention étaient obtenues avec une usure minimale, lorsque l'anneau 1 destiné à constituer la deuxième série d'anneaux était formé en un matériau tel que du cuivre au béryllium, alors que le ou les anneaux 2 destinés à former la deuxième série d'anneaux étaient constitués en laiton.

Selon une autre caractéristique avantageuse de l'anneau 1, destiné à constituer la deuxième série d'anneaux, l a languette de contact 16 est disposée à la périphérie externe de la deuxième couronne circulaire 11, cette languette étant décalée d'un angle α de valeur déterminée par rapport à l'un des ergots de positionnement 14, de façon à obtenir, lors de l'empilement successif des anneaux, formant première et deuxième série d'anneaux, par seul retournement alternatif des anneaux formant première et deuxième série d'anneaux, une distribution en épis alternée des languettes de connexion 16 de la deuxième couronne circulaire 11, formant piste de connexion des anneaux de la deuxième série d'anneaux. Sur la figure 3c, la languette de connexion 16 d'un anneau 1, formant la deuxième série d'anneaux, empilés sous ou sur l'anneau représenté sur cette figure, est également représentée en trait pointillé. Ainsi, par empilement successif des différents anneaux et retournement de ceux-ci, la distribution en épis des languettes de connexion est ainsi obtenue.

On comprendra bien entendu que, de cette manière, la connexion électrique des fils électriques ou conducteurs électriques constituant les nappes de fils 90 et 91 précédemment décrites, peut ainsi être effectuée facilement, le point de connexion pour des anneaux de la même série étant ainsi subdivisé selon deux génératrices distinctes de l'empilement d'anneaux constitué par une même série d'anneaux.

On comprendra également que, de cette façon, les anneaux d'une même série, bien que permettant de réaliser des points de connexion selon des génératrices de l'empilement d'anneaux différentes, peuvent être obtenus par découpage, à partir d'un seul et même outil, le mode de réalisation précédent n'impliquant donc, aucune difficulté particulière de réalisation des anneaux de l'une ou l'autre série.

On comprendra enfin, que les anneaux de la première ou de la deuxième série peuvent bien entendu être obtenus par découpage ou estampage, à partir d'une feuille de matériau conducteur, en un matériau tel que précédemment décrit, comportant sur une seule de ses faces une couche de matériau isolant tel qu'une laque ou un verni.

Ainsi qu'il apparaît en outre en figure 3d, l'anneau 3 destiné à constituer la troisième série d'anneaux, comprend avantageusement une première couronne circulaire 30 destinée à former deux pistes de contact opposées 300 et 301 avec la piste de contact correspondante d'un anneau de la première série d'anneaux, anneau noté 2 notamment sur la figure 3e. L'anneau 3 comporte en outre une deuxième couronne circulaire 31, extérieure à la première, et formant piste de connexion. La deuxième couronne circulaire 31 est rendue solidaire mécaniquement et électriquement de la première couronne circulaire, par deux points d'attache 32,33 diamétraux. Cette couronne ou deuxième couronne circulaire 31 comporte, à sa périphérie externe, deux ergots de positionnement, notés 34 et 35 sur la figure 3d, disposés selon un diamètre et une languette de connexion 36.

Les ergots de positionnement-entraînement 14, 15, 24 et 34, 35, ainsi que la languette de connexion 24 peuvent alors avantageusement être disposés au point de circonférence de la piste de connexion correspondante le plus éloigné des points de liaison respectifs 12,13, 22, 23 et 32, 33 afin d'obtenir la souplesse axiale maximale de la piste de connexion précitée.

Contrairement aux anneaux des première et deuxième séries, anneaux 2 et 1 respectivement, l'anneau 3 destiné à former anneau de la troisième série ne comporte pas de couche de matériau isolant. Au contraire, les pistes de contact opposées 300 et 301, sont munies avantageusement de bossages 3000, régulièrement répartis sur la circonférence de la couronne, alternés et opposés. Sur la figure 3d, on a représenté en coupe selon un plan radial DD, une vue agrandie de la section correspondante de l'anneau 3.

On notera également que les premières couronnes circulaires notées respectivement 20, 10 et 30 et destinées à former pistes de contact des anneaux d e la première, deuxième, respectivement troisième série d'anneaux, ont bien entendu mêmes dimensions radiales, de façon à rendre celles-ci superposables par simple retournement.

On comprendra en particulier que dans un empilement destiné à constituer une bague conformément à l'objet de l'invention, les anneaux du deuxième type notés 1, peuvent être remplacés, en nombre quelconque, par des anneaux du troisième type, anneaux 3, de façon à constituer des circuits ou contacts de sécurité dans le cas où ceux-ci sont destinés à commander les organes essentiels du véhicule. En particulier, le ou les contacts doubles en parallèle ainsi obtenus peuvent avantageusement être utilisés pour la commande d'organes de sécurité du véhicule, tels que par exemple le ballon gonflable de sécurité.

Les anneaux d'un même type ou les anneaux 1 formant deuxième série d'anneaux et anneaux 3 formant troisième série d'anneaux, sont empilés alternativement dans un sens puis dans l'autre de telle sorte que les pattes de connexion 16 sont orientées alternativement à droite puis à gauche du diamètre passant par les deux ergots diamétraux 14, 15, respectivement 34, 35 précédemment décrits. Les bagues ou languettes de connexion 16 d'un même type d'anneaux sont ainsi disposées suivant les deux génératrices de l'empilement constituant la bague.

En outre, les faces isolantes en regard des différents anneaux sont fixes par rapport à l'autre, ce qui permet de réduire les forces de frottement et par là le couple d'entraînement d'une part, en augmentant la fiabilité par suppression de l'usure des isolants d'autre part.

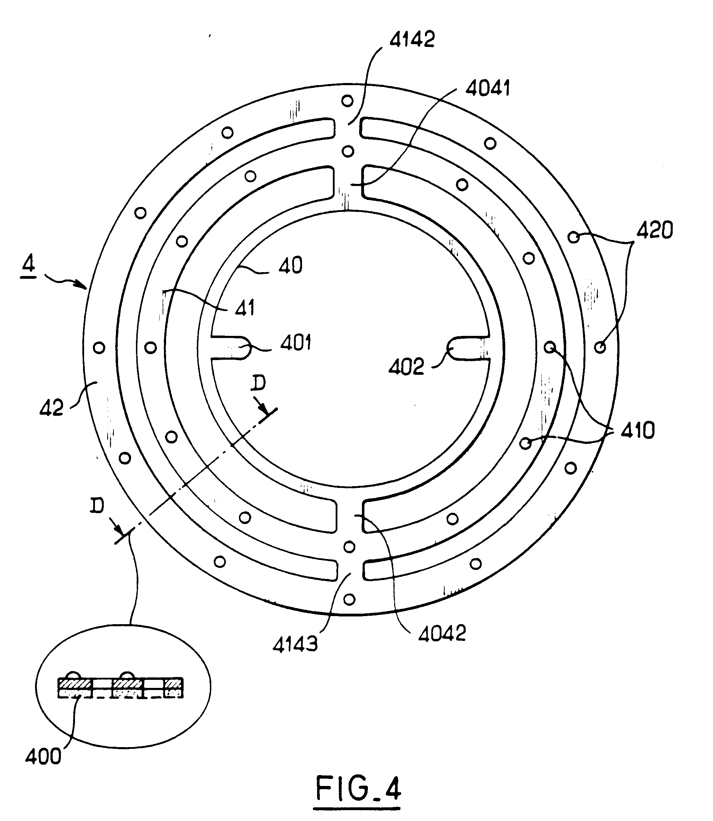

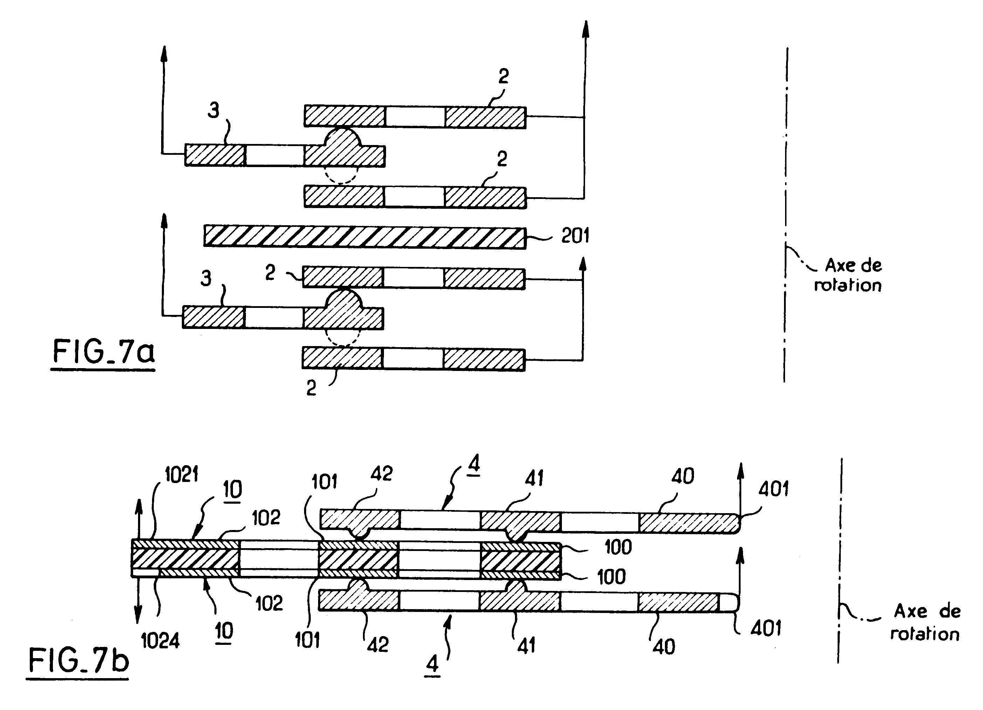

Un mode de réalisation particulièrement perfectionné de contacts de sécurité tels que précédemment décrit sera maintenant donné en liaison avec les figures 4 à 7a, 7b ci-après, dans lequel un des anneaux de contact superposé est supprimé.

Un autre objet du présent mode de réalisation est la mise en oeuvre d'une bague de contact, laquelle compte tenu de la suppression précitée et de modifications de la forme des anneaux conducteurs, présente un emcombrement en hauteur, selon la direction d'empilement des anneaux, sensiblement réduit.

Un autre objet du présent mode de réalisation est également une réduction des coûts de fabrication des bagues de transmission ainsi mises en oeuvre tant en raison d'un coût réduit de mise en oeuvre des pièces constitutives des bagues que des temps de montage réduits de ces dernières.

L'anneau conducteur conformément au mode de réalisation précité est remarquable en ce que cet anneau étant destiné à assurer la fonction d'un anneau de troisième série d'anneau et d'un anneau de contact de la première série pour obtenir un contact électrique redondant entre deux anneaux consécutifs d'une première série, cet anneau comporte une première couronne centrale, électriquement conductrice, constituant piste de connexion, une deuxième couronne intermédiaire circonscrite à la première couronne circulaire centrale, constituant piste de contact, une troisième couronne extérieure circonscrite à la deuxième couronne circulaire intermédiaire, constituant piste de contact. La première, deuxième et troisième couronne sont électriquement et mécaniquemnt solidaires par des points d'attache diamétraux. La troisième couronne extérieure joue le rôle d'un des anneaux consécutifs de première série connectés en parallèle dans le mode de réalisation des figures 1 à 3e.

L'anneau conducteur dans le présent mode de réalisation et la bague de transmission mise en oeuvre à l'aide de celui-ci trouvent application au domaine technique de l'automobile, de l'aéronautique et de la construction électromécanique en général, et plus particulièrement pour la commande de dispositifs de sécurité automobile tels que les enveloppes gonflables anti-collision.

L'anneau conducteur objet du présent mode de réalisation destiné à assurer la fonction d'un anneau de troisième série et d'un anneau de contact de la première série, conformément aux modes de réalisation des figures 1 à 3e pour obtenir un contact électrique redondant entre deux anneaux consécutifs d'une première série, sera tout d'abord décrit en liaison avec la figure 4.

Sur la figure 4 précitée, l'anneau objet de l'invention est référencé 4.

Ainsi qu'il apparaît sur la figure précitée, l'anneau comporte une première couronne centrale notée 40 constituant piste de connexion et une deuxième couronne intermédiaire notée 41 circonscrite à la première couronne circulaire centrale 40, constituant également piste de contact.

Une troisième couronne extérieure 42 est prévue, celle-ci étant circonscrite à la deuxième couronne circulaire intermédiaire 41, constituant piste de contact. Bien entendu, la première couronne centrale 40, la deuxième couronne intermédiaire 41 et la troisième couronne extérieure 42 sont constituées en un matériau électriquement conducteur. La première 40, deuxième 41 et troisième 42 couronnes sont électriquement et mécaniquement rendues solidaires par des points d'attache diamétraux. Ces points d'attache diamétraux sont notés 4041, 4042 et respectivement 4142 et 4143 sur la figure 4.

Ainsi qu'il sera décrit plus en détail ultérieurement dans la description, la troisième couronne extérieure 42 joue en fait le rôle d'un des anneaux consécutifs de première série connecté en parallèle, conformément à la description précédente.

Selon un aspect particulièrement avantageux, l'anneau conducteur 4 représenté en figure 4 est tel que la deuxième 41 et la troisième couronne 42, intermédiaire et extérieure, sont munies de bossages régulièrement répartis sur la circonférence des couronnes, sur une même face de celle-ci. Les bossages sont référencés respectivement 410 et 420 sur la figure 4.

Ainsi qu'on le remarquera en outre sur la figure précitée, la première couronne centrale 40 comporte deux ergots de positionnement, formant languettes de connexion, ces ergots de positionnement étant disposés sur un diamètre et dirigés vers le centre de symétrie de la couronne centrale 40.

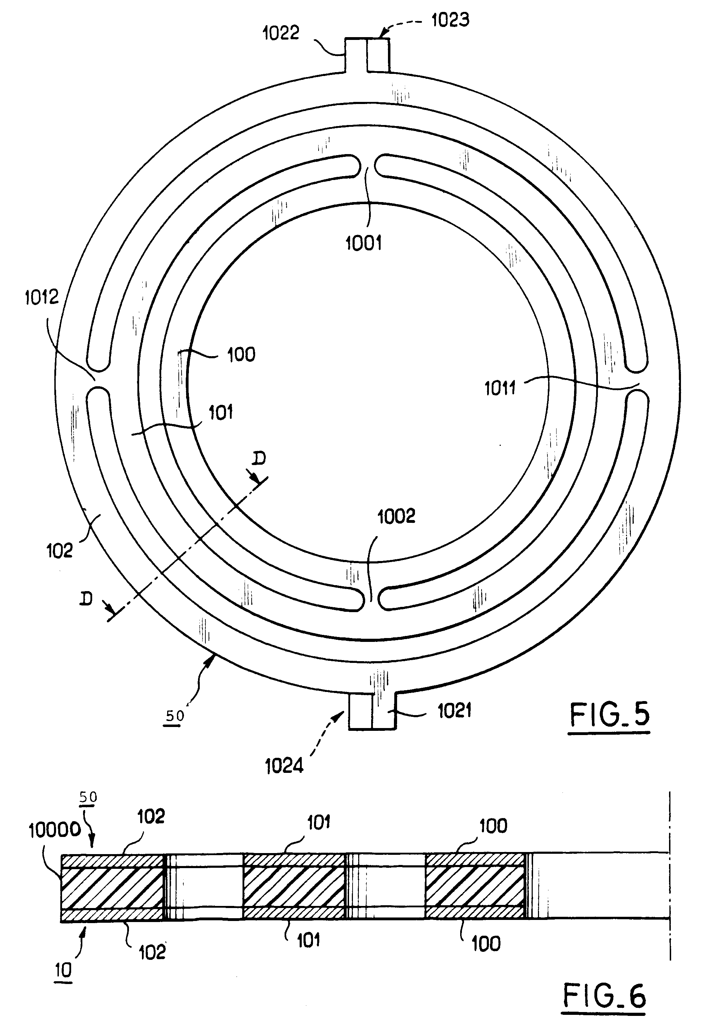

En vue de réaliser l'interconnexion de l'anneau 4 avec un anneau 50 assurant la fonction d'un anneau de la deuxième série du mode de réalisation des figures 1 à 3e, les anneaux de la deuxième série dans ce mode de réalisation étant décrits à titre d'exemple non limitatif solidaires du volant, l'anneau 50 comporte, ainsi que représenté en figure 5, une première couronne centrale 100, formant piste de contact. Cette couronne centrale 100 présente un diamètre et une largeur identiques aux dimensions correspondantes de la deuxième couronne intermédiaire 41 de l'anneau 4 précédemment décrit. En outre, l'anneau 50 comporte une deuxième couronne intermédiaire notée 101, présentant un diamètre et une largeur identique aux dimensions correspondantes de la troisième couronne extérieure 42 de l'anneau 4. Les première et deuxième couronnes centrale 100 et intermédiaire 101, sont destinées à venir en fonctionnement en vis-à-vis des couronnes intermédiaire 41 et extérieure 42, respectivement, de l'anneau 4 ainsi qu'il sera décrit ultérieurement dans la description.

En outre, une troisième couronne extérieure notée 102 est circonscrite à la deuxième couronne intermédiaire 101 et les première 100 et deuxième 101 et troisième couronnes 102 sont rendues électriquement et mécaniquement solidaires par des points d'attache diamétraux, lesquels sont notés 1001, 1002 et respectivement 1011, 1012.

Ainsi qu'on le remarquera en figure 5, de manière avantageuse, les points d'attache diamétraux 1001, 1002, 1011 et 1012 sont décalés deux à deux de 90°, de façon à assurer une bonne répartition des efforts sur l'ensemble des couronnes, première couronne 100, deuxième couronne 101, troisième couronne 102, lors de la mise en rotation ou du frottement des couronnes correspondantes de celles-ci. On notera bien entendu que, la troisième couronne extérieure 102 joue alors le rôle de piste de connexion, des languettes de connexion 1021 et 1022 étant prévues à cet effet.

Afin d'assurer l'empilement successif d'un couple constitué par un anneau 4 et un anneau 50, deux anneaux 50 et deux anneaux 4 étant alors successivement superposés pour constituer une bague de transmission conforme à l'objet de l'invention, ainsi qu'il sera décrit ci-après dans la description, deux anneaux 50 sont formés en vis-à-vis sur les faces opposées d'un matériau isolant, ainsi que représenté notamment en figure 6. Sur la figure précitée, on a représenté en coupe selon une ligne de coupe DD de la figure 5, une vue de la section des couronnes dénommées première couronne 100, deuxième couronne 101 et troisième couronne 102.

Selon une caractéristique avantageuse, les deux anneaux 50 formés sur un matériau isolant sont constitués par un circuit imprimé double face. Les première 100, deuxième 101 et troisième couronnes 102 sont alors en vis-à-vis, respectivement, ainsi que représenté en figure 6.

Ainsi qu'on pourra en outre le remarquer en figure 5, les troisièmes couronnes extérieures 102, comportent à leur périphérie deux languettes d'entraînement mécanique et de connexion électrique diamétralement opposées, lesquelles sont référencées 1021, 1022, et 1023, 1024. De manière avantageuse, et afin de faciliter la connexion des fils de liaison électrique aux organes de commande aux languettes 1021, 1022, 1023, 1024, les languettes 1023 et 1024 étant bien entendu disposées sur la face opposée aux languettes 1021 et 1022, ainsi que représenté de manière schématique par les flèches en pointillé relatives aux références 1023 et 1024, celles-ci sont décalées par rapport aux languettes de connexion 1022 et 1021 correspondantes.

Le mode de réalisation de la bague de transmission par empilement des différents anneaux précédemment décrits sera maintenant décrit de manière plus détaillée en liaison avec les figures 7a et 7b, dans lesquelles la figure 7a représente un empilement d'anneaux, conformément à l'objet de l'invention, pour réaliser un contact électrique de sécurité par connexion en parallèle de deux anneaux successifs, par l'intermédiaire d'un anneau de troisième série, cette figure 7a correspondant, de manière plus détaillée au mode de réalisation de l'empilement, pour constituer la bague de transmission telle que représentée en figure 3e précédemment décrite. Sur cette figure 7a, on a représenté respectivement à échelle agrandie, une coupe de l'empilement tel que représenté en figure 3e précédemment décrite et successivement selon un sens d'empilement, un anneau de première série noté 2, un anneau de troisième série noté 3, un anneau de première série noté 2, les deux anneaux de première série noté 2 étant connectés en parallèle pour constituer contact de sécurité sur l'anneau de troisième série noté 3 précité. Ensuite une feuille de matériau isolant 201 est empilée sur le dernier anneau de première série noté 2, puis un nouvel empilement d'anneaux successifs comportant un anneau de première série noté 2, un anneau de troisième série et un nouvel anneau de première série noté 2, connecté en parallèle avec l'anneau de première série noté 2, est empilé sur la feuille de matériau isolant 201. On constatera notamment que dans le cas de la réalisation des deux contacts de sécurité tels que représentés en figure 7a, ainsi que décrit précédemment, il est donc nécessaire d'empiler en fait sept éléments successifs, ce qui bien entendu nécessite une main d'oeuvre importante et des coûts de réalisation non négligeables. Le motif représenté en figure 7a peut être répété par empilement successif, une nouvelle feuille de matériau isolant 201 étant alors empilée, et la succession de deux anneaux de première série notés 2 adjacents à un anneau de troisième série noté 3 étant alors répétée.

Conformément à l'objet de l'invention, l'empilement des anneaux 4 et 10 pour réaliser des contacts de sécurité dans une bague de transmission conformément à l'objet de l'invention, est représenté en figure 7b. Le circuit imprimé double face comportant deux anneaux notés 10 en vis-à-vis, tels que représentés en figure 3, est alors associé, respectivement à un premier anneau noté 4 et à un deuxième anneau noté 4, les pistes ou couronnes intermédiaire 41 et extérieure 42 de chaque anneau noté 4 étant amenées en vis-à-vis de la piste intérieure 100 et intermédiaire 101, de l'anneau 10 correspondant, respectivement. Les connexions électriques des câbles ou conducteurs électriques reliés aux organes de commande, sont alors effectuées sur les languettes de connexion correspondantes 401 et 402 et 1021 et 1024 respectivement. Bien entendu, pour la réalisation de deux contacts de sécurité, chaque contact de sécurité étant constitué par un anneau 4 et un anneau 10, et la connexion en parallèle de chaque contact de sécurité étant assurée par les couronnes 100, 101 et 41,42, lesquelles sont connectées respectivement en parallèle, il est alors nécessaire, compte tenu du mode de réalisation représenté en figure 7b, de réaliser l'empilement de trois éléments, c'est-à-dire un circuit imprimé double face comportant deux anneaux 10, et deux anneaux 4 ainsi que décrit en liaison avec la figure 7b. Bien entendu, il est également possible de répéter le motif représenté en figure 7b, par empilement successif d'arrangements constitués par un circuit imprimé double face comportant deux anneaux 10, et deux anneaux 4 en vis-à-vis, deux anneaux 4 successifs étant alors séparés dans cet empilement par une couche de matériau isolant non représentée au dessin. De manière avantageuse, la couche de matériau isolant peut être formée par une feuille de mylar. Selon une variante de réalisation plus avantageuse, non limitative, ainsi que représentée notamment sur la figure 1 en vue agrandie, les anneaux 4 peuvent comporter sur la surface des première, deuxième, troisième couronnes opposée aux bossages, 410, 420, un revêtement noté 400 de matériau isolant. Dans ce cas, la couche de matériau isolant séparant deux anneaux 4 successifs est alors constituée par les revêtements isolants 400 de deux anneaux 4 en vis-à-vis.

En ce qui concerne la bague de transmission réalisée conformément à l'objet de l'invention par la mise en oeuvre d'anneaux 4 et d'anneaux 10 notamment, tels que précédemment décrit, il est bien entendu possible d'assurer le montage de la bague de transmission ainsi réalisée, de façon que la partie centrale des anneaux 4 soit solidaire du volant par exemple et entraînée avec celui-ci, où au contraire que cette même partie centrale, c'est-à-dire les ergots de positionnement 401 et 402, soient fixes par rapport au tube de colonne de direction, l'un ou l'autre des montages en fonction du modèle de véhicule correspondant pouvant être envisagé. Afin d'assurer un bon contact électrique au niveau des bossages disposés sur les piles de contact des anneaux 4, il est avantageux de prévoir un ou plusieurs éléments élastiques de maintien de la bague constituée par l'empilement précédemment décrit, ce ou ces éléments élastiques assurant une pression suffisante pour obtenir au niveau des bossages un contact électrique de bonne qualité.

On a ainsi décrit un mode de réalisation particulièrement avantageux, conformément à l'objet de la présente invention, d'un anneau conducteur pour bague de transmission électrique montée entre la colonne de direction et le volant d'un véhicule automobile.

Le mode de réalisation précité, notamment dans le cas de la réalisation de contact de sécurité dans lequel deux contacts sont connectés en parallèle pour la commande d'éléments de sécurité d'un véhicule tel que les sacs gonflables de protection ou analogue, permet bien entendu une mise en oeuvre simplifié de ce type de contacts de sécurité par rapport au mode de réalisation de la demande de brevet principal, dans la mesure où il permet, outre la diminution du nombre d'éléments à utiliser ou empiler, d'obtenir un gain de quatre fils de connexion et de deux soudures, ainsi qu'une simplification de mise en oeuvre pour chaque contact de sécurité.

En outre, la mise en oeuvre des anneaux 10 précédemment décrits est particulèrement facilitée dans la mesure où la technique de réalisation des circuits imprimés permet une réalisation à grande échelle sans difficulté.

La bague de transmission électrique montée entre la colonne de direction et le volant d'un véhicule automobile, objet de l'invention, permet d'assurer la liaison en rotation entre un commutateur de commande monté sur le volant et les récepteurs des organes à commander. Elle permet d'obtenir une très grande sécurité et une très grande fiabilité de fonctionnement. La grande sécurité et la grande fiabilité de fonctionnement précitées sont dues à la structure particulière des anneaux constituant la bague de transmission, objet de l'invention, anneaux dans lesquels les fonctions de connexion électrique et de contact entre anneaux sont séparées.

**Revendications**

1.  Bague de transmission électrique montée entre la colonne de direction (110) et le volant (120) d'un véhicule automobile pour assurer la liaison en rotation entre un commutateur de commande (140) monté sur le volant et les récepteurs des organes à commander, ladite bague étant composée d'une première série de n anneaux (2) conducteurs, s'étendant radialement par rapport à l'axe de la colonne de direction, solidaires d'une douille (5) fixée sur la colonne de direction qui coopèrent électriquement avec une deuxième série de n anneaux (1), mécaniquement imbriqués en alternance entre les anneaux de la première série, également conducteurs solidaires en rotation d'une embase (6) mécaniquement solidaire du volant, chaque paire de contacts formée par un anneau de chacune des deux séries étant isolée électriquement de la paire voisine, caractérisée en ce que chaque anneau conducteur de la première respectivement deuxième série est constitué par au moins deux couronnes concentriques (10, 11 ; 20, 21 ; 40, 41, 42 ; 100, 101, 102) rendues électriquement et mécaniquement solidaires en au moins deux points de liaison (12, 13 ; 22, 23 ; 4041, 4042, 4043 ; 1001, 1002, 1011, 1012) disposés selon un de leur diamètre commun, de façon à séparer, au niveau de chaque anneau, les fonctions de connexion et d'entraînement-maintien par la douille (5) respectivement l'embase (6) d'une part et de contact électrique avec l'anneau de l'autre série d'autre part.

2. Bague de transmission selon la revendication 1, caractérisée en ce que chaque anneau comporte sur une face une couche (201,101) de matériau isolant tel qu'un vernis ou une laque.

3. Bague de transmission selon les revendications 1 et 2, caractérisée en ce que la couche (101,201) de matériau isolant est contenue alternativement entre deux anneaux (1) solidaires en rotation du volant puis entre deux anneaux (2) solidaires de la colonne de direction.

4. Bague de transmission selon les revendications 1 ou 2, caractérisée en ce qu'elle comporte au moins un anneau (3) d'une troisième série, ledit anneau comprenant deux pistes de contact opposées, une sur chaque face, destinées à assurer le contact électrique entre deux anneaux (2) successifs de première série empilés symétriquement par rapport au plan médian dudit anneau (3).

5. Anneau conducteur destiné à la réalisation d'une bague de transmission électrique selon l'une des revendications 1 à 4, caractérisé en ce que ledit anneau (2) étant destiné à constituer la première série d'anneaux, celui-ci comprend :
    - une première couronne circulaire (20) destinée à former piste de contact avec la piste de contact correspondante d'un anneau de la deuxième série d'anneaux,
    - une deuxième couronne circulaire (21), intérieure à la première, formant piste de connexion, ladite deuxième couronne étant rendue solidaire mécaniquement et électriquement de la première couronne circulaire par deux points d'attache diamétraux (22,23) et comportant à sa périphérie interne au moins un ergot de positionnement (24) et une languette de connexion (25).

6. Anneau conducteur selon la revendication 5, caractérisé en ce que ladite première couronne (20) formant piste de contact comporte une surface plane (200) formant piste de contact.

7. Anneau conducteur selon l'une des revendications 5 ou 6, caractérisé en ce qu'il est constitué en un matériau tel que le laiton.

8. Anneau conducteur destiné à la réalisation d'une bague de transmission électrique selon l'une des revendications 1 à 4, caractérisé en ce que ledit anneau (1) étant destiné à constituer la deuxième série d'anneaux, celui-ci comprend :
    - une première couronne circulaire (10) destinée à former piste de contact avec la piste de contact correspondante d'un anneau de la première série d'anneaux,
    - une deuxième couronne circulaire (11), extérieure à la première, formant piste de connexion, ladite deuxième couronne étant rendue solidaire mécaniquement et électriquement de la première couronne circulaire par deux points d'attache (12,13) diamétraux et comportant à sa périphérie externe deux ergots de positionnement (14,15) disposés selon un diamètre et une languette de connexion (16).

9. Anneau conducteur selon la revendication 8, caractérisé en ce que ladite première couronne circulaire comporte une face (100) formant piste de contact présentant des bossages (1000) régulièrement répartis.

10. Anneau conducteur selon l'une des revendications 8 ou 9, caractérisé en ce qu'il est constitué en un matériau tel que du cuivre au béryllium.

11. Anneau conducteur selon les revendications 8 et 9, caractérisé en ce que la languette de contact(16) disposée à la périphérie externe de la deuxième couronne circulaire (11) est décalée d'un angle ($\alpha$) déterminé par rapport à l'un des ergots de positionnement (14) de façon à obtenir, lors de l'empilement successif des anneaux formant première et deuxième série d'anneaux, par seul retournement alternatif des anneaux formant première et deuxième série d'anneaux, une distribution en épis alternée des languettes de connexion (16) de la deuxième couronne circulaire (11) formant piste de connexion des anneaux de la deuxième série d'anneaux.

**12.** Anneau conducteur destiné à la réalisation d'une bague de transmission électrique selon la revendication 4, caractérisé en ce que ledit anneau (3) étant destiné à constituer la troisième série d'anneaux, celui-ci comprend :
- une première couronne circulaire (30) destinée à former deux pistes de contact opposées (300, 301), une sur chaque face, avec les pistes de contact correspondantes des deux anneaux successifs de la première série d'anneaux,
- une deuxième couronne circulaire (31), extérieure à la première formant piste de connexion, ladite deuxième couronne étant rendue solidaire mécaniquement et électriquement de la première couronne circulaire par deux points d'attache (32,33) diamétraux et comportant à sa périphérie externe deux ergots de positionnement (34,35) disposés selon un diamètre et une languette de connexion (36).

**13.** Anneau conducteur selon la revendication 12, caractérisé en ce que les pistes de contact opposées (300,301) sont munies de bossages (3000) régulièrement répartis sur la circonférence de la couronne, alternés et opposés.

**14.** Anneau conducteur selon l'une des revendications 5 à 13 précédentes, caractérisé en ce que les premières couronnes circulaires destinées à former piste de contact des anneaux de la première, deuxième et troisième série d'anneaux ont mêmes dimensions, de façon à rendre celles-ci superposables par retournement.

**15.** Anneau conducteur selon l'une des revendications 5 à 14 précédentes, caractérisé en ce que les couronnes (21, 11, 31) formant piste de connexion et d'entraînement-maintien ont une dimension radiale faible, inférieure à un tiers de la dimension radiale de la couronne (20,10,30) correspondante formant piste de contact électrique, afin de leur conférer une qualité de souplesse axiale relative suffisante.

**16.** Anneau conducteur destiné à la realisation d'une bague de transmission électrique selon la revendication 4, caractérisé en ce que ledit anneau (4) étant destiné à assurer la fonction d'un anneau de troisième série d'anneaux, et d'un anneau de contact (2) de la première série pour obtenir un contact électrique redondant entre deux anneaux consécutifs (2) d'une première série, ledit anneau comporte :
- une première couronne centrale (40), constituant piste de connexion,
- une deuxième couronne intermédiaire (41) circonscrite à la première couronne circulaire centrale (40), constituant piste de contact,
- une troisième couronne extérieure (42) circonscrite à la deuxième couronne circulaire intermédiaire (41), constituant piste de contact, lesdites premières (40), deuxième (41) et troisième couronne (42) étant électriquement et mécaniquement solidaires par des points d'attache diamétraux (4041,4042,4142,4143), ladite troisième couronne extérieure (42) assurant la fonction d'un des anneaux de première série connectés en parallèle.

**17.** Anneau conducteur selon la revendication 16, caractérisé en ce que la deuxième (4) et troisième (42) couronne, intermédiaire et extérieure, sont munies de bossage (410,420) régulièrement répartis sur la circonférence desdites couronnes sur une même face de celles-ci.

**18.** Anneau conducteur selon l'une des revendications 8 à 17, caractérisé en ce que ladite première couronne centrale (40) comporte deux ergots (401,402), de positionnement formant languette de connexion disposés sur un diamètre et dirigés vers le centre de symétrie de celle-ci

**19.** Anneau conducteur selon l'une des revendications 8 à 18 , caractérisé en ce que en vue de réaliser l'interconnexion dudit anneau (4) avec un anneau (50) assurant la fonction d'un anneau de la deuxième série (1) solidaire du volant, selon la revendication 8, ledit anneau (50) comporte :
- une première couronne centrale (100) formant piste de contact, ladite couronne centrale (100) présentant un diamètre et une largeur identiques, aux dimensions correspondantes de ladite deuxième couronne intermédiaire (41) de l'anneau(4),
- une deuxième couronne intermédiaire (101) présentant un diamètre et une largeur identiques aux dimensions correspondantes de ladite troisième couronne extérieure (42) dudit anneau (4), lesdites première et deuxième couronne centrale (100) et intermédiaire (101) étant destinées à venir en fonctionnement en vis-à-vis des couronnes intermédiaires (41) et extérieure (42) respectivement de l'anneau (4),
- une troisième couronne extérieure (102) circonscrite à ladite deuxième couronne intermédiaire (101), lesdites première (100), deuxième (101) et troisième couronnes (102) étant électriquement et mécaniquement solidaires par des points d'attache diamétraux (1001,1002,1011,1012).

20. Anneau conducteur selon la revendication 19, caractérisé en ce que, afin d'assurer l'empilement successif d'un couple constitué par un anneau (4) et un anneau (50), deux anneaux (50) et deux anneaux (4) étant successivement superposés, deux anneaux (10) sont formés en vis-à-vis sur les faces opposées d'un matériau isolant (10000).

21. Anneau conducteur selon la revendication 20, caractérisé en ce que deux anneaux (50) formés sur un matériau isolant sont constitués par un circuit imprimé double face, les première (100), deuxième (101) et troisième couronne (102) étant en vis-à-vis respectivement.

22. Anneau conducteur selon l'une des revendications 20 ou 21, caractérisé en ce que lesdites troisièmes couronnes (102) extérieures comportent à leur périphérie deux languettes d'entraînement mécanique et de connexion (1021,1022) électrique diamétralement opposées.

23. Anneau selon l'une des revendications 20 à 22, caractérisé en ce que deux anneaux successifs (4) sont séparés dans ledit empilement par une couche de matériau isolant.

24. Anneau selon la revendication 23, caractérisé en ce que la couche de matériau isolant est formée par une feuille de mylar.

25. Anneau selon la revendication 23, caractérisé en ce que lesdits anneaux successifs (4) comportant sur la face des première, deuxième, troisième couronnes opposée aux bossages un revêtement (400) de matériau électriquement isolant séparant deux anneaux successifs, la couche de matériau isolant étant constituée par les revêtements isolants des deux anneaux successifs (4) en vis-à-vis.

**Claims**

1. Transmission ring assembly adapted to be mounted between the steering column (10) and the steering wheel (120) of an automobile vehicle to provide an electrical connection between a control switch (140) mounted on said steering wheel and a device controlled by said switch, said assembly comprising a bush (5) adapted to be fixed to said steering column, a first series of conductive rings (2) extending radially relative to the axis of the steering column and fastened to said bush, a base member (6) adapted to be mechanically attached to said steering wheel, a second series of conductive rings (1) fastened to said base member and adapted to cooperate electrically with said rings of said first series, and means for electrically insulating each pair of contacts formed by a respective ring from said first series and a respective ring from said second series from an adjacent pair of contacts, in which assembly each ring of said first or second series comprises at least two concentric annuli (10,11;20,21;40,41,42;100,101,102) electrically and mechanically joined at at least two points (12,13;22,23; 4041,4042,4043; 1001,1002,1011,1012) on a common diameter whereby each ring has its connection and drive/retention by said bush (5), respectively said base member (6), functions separated from its electrical contact function with the ring of the other series.

2. Transmission ring assembly according to claim 1, wherein each ring comprises on one side a layer (201,101) of insulative material.

3. Transmission ring assembly according to claim 2, wherein said layer (201,101) of insulative material is contained alternately between two rings (1) constrained to rotate with said steering wheel and then between two rings (2) fastened to said steering column.

4. Transmission ring assembly according to claim 1, further comprising at least one ring (3) constituting a third series of rings and comprising two opposed contact tracks, one on each side, adapted to procure electrical contact between two successive rings (2) of said first series stacked symmetrically relative to the median plane of said at least one ring (3) constituting said third series of rings.

5. Conductive ring adapted to form part of a transmission ring assembly according one of claims 1 to 4, characterised in that said conductive ring is adapted to constitute a ring of said first series and comprises :
   - a first annulus (20) adapted to form a contact track which contacts a corresponding contact track on a ring of said second series,
   - a second annulus (21) inside said first annulus adapted to form a connection track and electrically and mechanically joined to said first annulus at two diametral attachment points (22, 23), and

- at least one positioning lug (24) and a connecting tab (25) on its inside periphery.

6. Conductive ring according to claim 5, wherein said first annulus forming (20) a contact track comprises a flat surface (200) defining said contact track.

7. Conductive ring according to claim 5 or 6, made from brass.

8. Conductive ring adapted to form part of a transmission ring assembly according to one of claims 1 to 4, characterised in that said conductive ring (1) is adapted to constitute a ring of said second series and comprises;

- a first annulus (10) adapted to form a contact track which contacts a corresponding contact track On a ring of said first series,
- a second annulus (11) outside said first annulus, adapted to form a connection track and electrically and mechanically joined to said first annulus at two diametral attachment points (12,13), and
- on its outside periphery, two positioning lugs (14,15) disposed on a diameter and a connecting tab.

9. Conductive ring according to claim 8, wherein said first annulus comprises a surface (1000) defining said contact track on which are regularly distributed bosses (1000).

10. Conductive ring according to claim 8 or 9, made from copper beryllium alloy.

11. Conductive ring according to claims 8 and 9, wherein said contact tab (16) on the outside periphery of said second annulus (11) is offset by a predetermined angle ($\alpha$) relative to one (14) of said positioning lugs whereby, on consecutive stacking of the rings forming said first and second series alternating overturning of said rings forming said first and second series procures an alternating herringbone arrangement of said connecting tabs (16) of said second annulus (11) forming said connecting track of said rings of said second series.

12. Conductive ring adapted to form part of a transmission ring assembly according to claim 4, characterised in that said conductive ring (3) is adapted to constitute a ring of said third series and comprises;

- a first annulus (30) adapted to form two opposed contact tracks (300,301), one on each side, which contact corresponding contact tracks on two successive rings of said first series, and
- a second annulus (31) outside said first annulus, adapted to form a connection track and electrically and mechanically joined to said first annulus at two diametral attachment points (32,33) and comprising on its outside periphery two positioning lugs (34,35) disposed on a diameter and a connecting tab (36).

13. Conductive ring according to claim 12, wherein said opposed contact tracks (300,301) comprise bosses (3000) regularly distributed along the circumference of said annulus in alternating opposed relationship.

14. Conductive ring according to one of claims 5 to 13, wherein said first annuli adapted to form contact tracks of said rings of said first, second and third series of rings have the same dimensions whereby they can be superposed by turning them over.

15. Conductive ring according to one of claims 5 to 14, wherein said annuli (21,11,31) forming said connection and drive/retention tracks are of relatively limited size in the radial direction, having less than one third the radial dimension of the corresponding annulus (20,10,30) forming an electrical contact track, whereby sufficient relative axial flexibility is conferred upon them.

16. Conductive ring adapted to form part of a transmission ring assembly according to claim 4, characterised in that said ring (4) is adapted to function as a ring of said third series of rings and as a contact ring (2), of said first series of rings in order to procure a redundant electrical contact between two consecutive rings of said first series and comprising :

- a central first annulus (40) forming a connection track,
- an intermediate second annulus (41) circumscribed on said central first annulus (40) and forming a contact track, and
- an outer third annulus (42) circumscribed on said intermediate second annulus (41) and constituting a contact track, said first (40), second (41) and third (42) annuli being electrically and mechanically joined at diametral attachment points (4041,4042,4142,4143) and said outer third annulus performing the function of one of the rings of said first series connected in parallel.

17. Conductive ring according to claim 16, wherein said intermediate second annulus (41) and said outer third annulus (42) comprise bosses (410,420) regularly distributed along the circumference of said annuli on a same side thereof.

18. Conductive ring according to one of claims 8 to 17, wherein said central first annulus (40) comprises two positioning lugs (401,402) forming connection tabs disposed on a diameter and directed towards its center of symmetry.

19. Conductive ring according to one of claims 8 to 18, wherein in order to connect said ring (4) to a ring (50) serving as a ring of said second series (1) fastened to said steering wheel, according to claim 8, said ring (50) comprises :
   - a central first annulus (100) forming a contact track, said central annulus (100) having a diameter and a width identical to the corresponding dimensions of said intermediate second annulus (41) of said ring (4),
   - an intermediate second annulus (101) having a diameter and a width identical to the corresponding dimensions of said outer third annulus (42), said central first annulus (100) and said intermediate second annulus (101) being adapted to lie in service opposite respective intermediate (41) and outer annuli (42) of said ring (4), and
   - an outer third annulus (102) circumscribed on said intermediate second annulus (101), said first (100), second (101) and third (102) annuli being electrically and mechanically joined at diametral attachment points (1001,1002,1011,1012).

20. Conductive ring according to claim 19, wherein in order to procure successive stacking of a pair comprising one third series ring (4) and one annulus (50) of a second series ring, two annuli (10) of a second series ring and two third series rings (4) being successively superposed, two annuli (50) of a second series ring are formed in face-to-face relationship on opposite sides of an insulative material (1000).

21. Conductive ring according to claim 20, wherein said two annuli (50) of a second series ring formed on said insulative material are constituted by a double-sided printed circuit, said first (100), second (101) and third (102) annuli being in face-to-face relationship.

22. Conductive ring according to one of claims 20 or 21, wherein said outer third annuli (102) comprise at their periphery two diametrally opposed mechanical drive and electrical connection tabs (1021,1022).

23. Conductive ring according to one of claims 20 to 22, comprising a layer of insulative material separating two consecutive rings (4) in said stack.

24. Conductive ring according to claim 23, wherein said layer of insulative material is a film of mylar.

25. Conductive ring according to claim 23, wherein said rings (4) comprise on the side of said first, second and third annuli opposite to said bosses a coating (400) of electrically insulative material separating two consecutive rings and said layer of insulative material is constituted by said insulative coatings of said two rings (4) in face-to-face relationship.

**Patentansprüche**

1. Elektrischer Übertragungsring, der zwischen der Lenkspindel (110) und dem Lenkrad (120) eines Kraftfahrzeugs angebracht ist, die Drehverbindung zwischen einem Betätigungsschalter (140), der auf dem Lenkrad angebracht ist, und den Empfängern von zu bedienenden Organen angebracht ist, sicherzustellen, wobei der Ring gebildet wird aus einer ersten Reihe von n Leitungsringen (2), die sich bezüglich der Achse der Lenkspindel radial erstrecken, wobei sie mit einer Hülse (5) verbunden sind, die auf der Lenkspindel befestigt sind, die elektrisch mit einer zweiten Reihe von n Ringen (1) zusammenwirken, die mechanisch abwechselnd zwischen die Ringe der ersten Reihe verschachtelt sind, wobei sie ebenfalls Leiter sind, die drehverbunden mit einer Basis (6) sind, die mechanisch mit dem Lenkrad verbunden ist, wobei ein jedes Paar von Kontakten, das durch einen Ring einer jeden der beiden Reihen gebildet ist, elektrisch vom Nachbarpaar isoliert ist, **dadurch gekennzeichnet,** daß jeder leitende Ring der ersten bzw. zweiten Reihe gebildet wird aus wenigstens zwei konzentrischen Kränzen (10, 11; 20, 21; 40, 41, 42; 100, 101, 102), die elektrisch und mechanisch verbunden sind an wenigstens zwei Verbindungspunkten (12, 13; 22, 23; 4041, 4042, 4043; 1001, 1002, 1011, 1012), die entlang einem ihrer gemeinsamen Durchmesser derart angeordnet sind, daß sie auf der Höhe eines jeden Rings die Verbindungsfunktionen und Antriebsbeibehaltung durch die Hülse (5) bzw. die Basis (6) einerseits und den elektrischen Kontakt mit dem Ring der anderen Reihe andererseits, trennen.

2. Übertragungsring nach Anspruch 1, **dadurch gekennzeichnet,** daß jeder Ring auf einer Seite eine Schicht (201, 101) von isolierendem Material, wie einem Firnis oder einem Lack, aufweist.

3. Übertragungsring nach Anspruch 1 und 2, **dadurch gekennzeichnet,** daß die Schicht (101, 201) von isolierendem Material abwechselnd zwischen zwei Ringen (1) enthalten ist, die verbunden sind mit dem Lenkrad, sodann zwischen zwei Ringen (2) enthalten ist, die mit der Lenkspindel verbunden sind.

4. Übertragungsring nach Anspruch 1 oder 2, **dadurch gekennzeichnet,** daß er wenigstens einen Ring (3) einer dritten Reihe aufweist, wobei der Ring zwei gegenüberliegende Kontaktbahnen aufweist, eine auf jeder Seite, die dazu bestimmt sind, den elektrischen Kontakt zwischen zwei aufeinanderfolgenden Ringen (2) der ersten Reihe sicherzustellen, die symmetrisch bezüglich einer Mittenebene des Rings (3) geschichtet sind.

5. Leitungsring für die Erzeugung eines elektrischen Übertragungsringes nach einem der Ansprüche 1 bis 4, **dadurch gekennzeichnet,** daß der Ring (2) dazu dient, die erste Reihe von Ringen zu bilden, wobei dieser aufweist:
einen ersten kreisförmigen Kranz (20), der dazu bestimmt ist, eine Leiterbahn mit der entsprechenden Leiterbahn eines Rings der zweiten Ringreihe zu bilden,
einen zweiten kreisförmigen Kranz (21) im Inneren des ersten, der eine Verbindungsbahn bildet, wobei der zweite Kranz mechanisch und elektrisch mit dem ersten kreisförmigen Kranz durch zwei diametrale Befestigungspunkte (22, 23) verbunden ist, und an seinem inneren Umfang wenigstens einen Positioniervorsprung (24) und eine Verbindungszunge (25) aufweist.

6. Leitungsring nach Anspruch 5, **dadurch gekennzeichnet,** daß der erste Kranz (20), der eine Leiterbahn bildet, eine ebene Oberfläche (200) aufweist, die eine Leiterbahn bildet.

7. Leitungsring nach einem der Ansprüche 5 oder 6, **dadurch gekennzeichnet,** daß er gebildet ist aus einem Material, wie beispielsweise Messing.

8. Leitungsring für die Erzeugung eines elektrischen Übertragungsringes nach einem der Ansprüche 1 bis 4, **dadurch gekennzeichnet,** daß der Ring (1) dazu bestimmt ist, die zweite Reihe von Ringen zu bilden, wobei er aufweist:
einen ersten kreisförmigen Kranz (10) der dazu bestimmt ist, eine Kontaktbahn mit der entsprechenden Kontaktbahn eines Ringes der ersten Ringreihe zu bilden,
einen zweiten kreisförmigen Kranz (11) außerhalb des ersten, der eine Verbindungsbahn bildet, wobei der zweite Kranz mechanisch und elektrisch mit dem ersten kreisförmigen Kranz durch zwei diametrale Befestigungspunkte (12, 13) gemacht wird, und an seinem äußeren Umfang zwei Positioniervorsprünge (14, 15) aufweist, die gemäß einem Durchmesser angeordnet sind, und eine Verbindungszunge (16) aufweist.

9. Leitungsring nach Anspruch 8, **dadurch gekennzeichnet,** daß der erste kreisförmige Kranz eine Seite (100) aufweist, die eine Kontaktbahn bildet, die regelmäßig verteilte Vorsprünge (1000) aufweist.

10. Leitungsring nach Anspruch 8 oder 9, **dadurch gekennzeichnet,** daß er aus einem Material, wie beispielsweise Kupfer oder Beryllium gebildet ist.

11. Leitungsring nach den Ansprüchen 8 und 9, **dadurch gekennzeichnet,** daß die Kontaktzunge (16), die am äußeren Umfang des zweiten kreisförmigen Kranzes (11) angeordnet ist, um einen Winkel ($\alpha$) versetzt ist, der bestimmt ist bezüglich einem der Positioniervorsprünge (14) derart, daß er beim aufeinanderfolgenden Schichten der Ringe, die die erste und Zweite Ringreihe bilden, durch abwechselndes ausschließliches Umdrehen der Ringe, die die erste und zweite Ringreihe bilden, erreicht wird, wobei eine abwechselnde, ährenförmige Verteilung von Verbindungszungen (16) des zweiten kreisförmigen Kranzes (11) eine Verbindungsbahn der Ringe der zweiten Reihe von Ringen bildet.

12. Leitungsring, der zur Herstellung eines elektrischen Übertragungsringes nach Anspruch 4 dient, **dadurch gekennzeichnet,** daß der Ring (3) dazu bestimmt ist, die dritte Ringreihe zu bilden, wobei dieser aufweist:
einen ersten kreisförmigen Kranz (30), der dazu bestimmt ist, zwei gegenüberliegende Kontaktbahnen (300, 301) zu bilden, eine auf jeder Seite, mit den entsprechenden Kontaktbahnen der beiden aufeinanderfolgenden Ringe der ersten Ringreihe,

einen zweiten kreisförmigen Kranz (31), der außerhalb des ersten eine Verbindungsbahn bildet, wobei der zweite Kranz mechanisch und elektrisch verbunden ist mit dem ersten kreisförmigen Kranz durch zwei diametrale Befestigungspunkte (32, 33) und an seinem äußeren Umfang zwei Positioniervorsprünge (34, 35) aufweist, die entlang einem Durchmesser angeordnet sind und eine Verbindungszunge (36) aufweist.

13. Leitungsring nach Anspruch 12, **dadurch gekennzeichnet,** daß die gegenüberliegenden Kontaktbahnen (300, 301) mit Vorsprüngen (3000) versehen sind, die regelmäßig am Umfang des Kranzes, abwechselnd und gegenüberliegend verteilt angeordnet sind.

14. Leitungsring nach einem der vorhergehenden Ansprüche 5 bis 13, **dadurch gekennzeichnet,** daß die ersten kreisförmigen Kränze, die dazu bestimmt sind, eine Kontaktbahn der Ringe der ersten, zweiten und dritten Ringreihe zu bilden, dieselben Abmessungen aufweisen, derart, daß diese durch Umschlagen übereinander schichtbar sind.

15. Leitungsring nach einem der vorhergehenden Ansprüche 5 bis 14, **dadurch gekennzeichnet,** daß Kränze (21, 11, 31), die Verbindungsbahnen und Mitnahme-Haltebahnen bilden, eine schwache radiale Abmessung aufweisen, die geringer ist als ein Drittel der radialen Abmessung des entsprechenden Kranzes (20, 10, 30), der eine elektrische Kontaktbann bildet, um ihnen eine ausreichende relative axiale Nachgiebigkeitseigenschaft zu verleihen.

16. Leitungsring für die Herstellung eines elektrischen Übertragungsringes nach Anspruch 4, **dadurch gekennzeichnet,** daß der Ring (4) dazu bestimmt ist, die Funktion eines Ringes in der dritten Ringreihe, und eines Kontaktrings (2) der ersten Reihe sicherzustellen, um einen redundanten elektrischen Kontakt zwischen zwei aufeinanderfolgenden Ringen (2) einer ersten Reihe sicherzustellen, wobei der Ring aufweist:

einen ersten zentralen Kranz (40), der eine Verbindungsbahn bildet,

einen zweiten Zwischenkranz (41), der den ersten kreisförmigen zentralen Kranz (40) umgibt, der eine Kontaktbahn bildet,

einen äußeren dritten Kranz (42), der sich um den zweiten kreisförmigen Zwischenkranz (41) erstreckt, der eine Kontaktbahn bildet, wobei der erste (40), zweite (41) und dritte Kranz (42) elektrisch und mechanisch verbunden sind durch diametrale Befestigungspunkte (4041, 4042, 4142, 4143), wobei der äußere dritte Kranz (42) die Funktion von einem der parallel miteinander verbundenen Ringe der ersten Reihe sicherstellt.

17. Leitungsring nach Anspruch 16, **dadurch gekennzeichnet,** daß der zweite (41) und dritte (42) Kranz, der Zwischenund äußere Kranz mit Vorsprüngen (410, 420) versehen sind, die regelmäßig am Umfang der Kränze auf einer gleichen Seite von diesen verteilt angeordnet sind.

18. Leitungsring nach einem der Ansprüche 8 bis 17, **dadurch gekennzeichnet,** daß der erste zentrale Kranz (40) zwei Positioniervorsprünge (401, 402) aufweist, die Kontaktzungen bilden, die auf demselben Durchmesser und zum Symmetriezentrum von dieser ausgerichtet angeordnet sind.

19. Leitungsring nach einem der Ansprüche 8 bis 18, **dadurch gekennzeichnet,** daß, um die Verbindung des Ringes (4) mit einem Ring (50) herzustellen, der die Funktion eines Ringes der zweiten Reihe (1) sicherstellt, der mit dem Lenkrad verbunden ist, nach Anspruch 8, wobei der Ring (50) aufweist:

einen ersten zentralen Kranz (100), der eine Kontaktbahn bildet, wobei der zentrale Kranz (100) einen Durchmesser und eine zu den entsprechenden Abmessungen des zweiten Zwischenkranzes (41) des Rings (4) identische Breite aufweist,

einen zweiten Zwischenkranz (101), der einen Durchmesser und eine Breite aufweist, die identisch sind zu den entsprechenden Anmessungen des dritten äußeren Kranzes (42) des Rings (4), wobei der erste zentrale Kranz (100) und zweite Zwischenkranz (101) dazu dienen, im Betrieb gegenüber dem Zwischenkranz (41) bzw. dem Außenkranz (42) des Rings (4) zu kommen,

einen dritten äußeren Kranz (102), der den zweiten Zwischenkranz (101) umgibt, wobei erste (100), zweite (101) und dritte Kränze (102) elektrisch und mechanisch durch diametrale Befestigungspunkte (1001, 1002, 1011, 1012) verbunden sind.

20. Leitungsring nach Anspruch 19, **dadurch gekennzeichnet,** daß durch Sicherstellung der aufeinanderfolgenden Schichtung eines Paares, gebildet aus einem Ring (4) und einem Ring (50), zwei Ringe (50) und zwei Ringe (4) aufeinanderfolgend übereinandergeschichtet sind, wobei zwei Ringe (10) gegenüber den einander gegenüberliegenden Seiten eines isolierenden Materials (10000) ausgebildet sind.

21. Leitungsring nach Anspruch 20, **dadurch gekennzeichnet,** daß zwei Ringe (50), die auf einem isolierenden Material ausgebildet sind, gebildet werden durch einen zweiseitigen gedruckten Schaltkreis, wobei der erste (100), der zweite (101) und der dritte Kranz (102) entsprechend gegenüberliegen.

22. Leitungsring nach Anspruch 20 oder 21, **dadurch gekennzeichnet,** daß die dritten äußeren Kränze (102) an ihrem Umfang zwei mechanische Mitnahme- und elektrische Verbindungszungen (1021, 1022) aufweisen, die diametral einander gegenüberliegen.

23. Ring nach einem der Ansprüche 20 bis 22**, dadurch gekennzeichnet,** daß die beiden aufeinanderfolgenden Ringe (4) in der Schichtung durch eine Schicht aus isolierendem Material getrennt sind.

24. Ring nach Anspruch 23, **dadurch gekennzeichnet,** daß die Schicht aus isolierendem Material aus einem Blatt aus Polyesterfilm gebildet wird.

25. Ring nach Anspruch 23, **dadurch gekennzeichnet,** daß die aufeinanderfolgenden Ringe (4) auf der Seite der ersten, zweiten, dritten Kränze gegenüber den Vorsprüngen einen Überzug (400) aus elektrisch isolierendem Material aufweisen, das zwei aufeinanderfolgende Ringe trennt, wobei die Schicht des isolierenden Materials gebildet wird aus isolierenden Überzügen von zwei einander gegenüberliegenden aufeinanderfolgenden Ringen (4).

## FIG_1

## FIG_2

## FIG.3b

COUPE BB

## FIG.3a

FIG.3c

FIG.3d

COUPE AC

FIG. 3e

## FIG.4

FIG.5

FIG.6

FIG.7a

FIG.7b

Axe de rotation